# EUROPEAN PATENT APPLICATION

(11) **EP 4 579 890 A1**
(43) Date of publication of application: **02.07.2025**
(21) Application number: 24214498.8
(22) Date of filing: 21.11.2024
(51) Int. Cl.: H01M 50/103, H01M 50/119, H01M 50/15, H01M 50/159, H01M 50/176, H01M 50/55, H01M 50/553, H01M 50/342

(54) **POWER STORAGE DEVICE AND METHOD OF MANUFACTURING THE POWER STORAGE DEVICE**

(30) Priority: 26.12.2023 JP 2023219639
(71) Applicant: Prime Planet Energy & Solutions, Inc., Chuo-ku, Tokyo 103-0022 (JP)
(72) Inventor: UCHIDA, Yozo, Tokyo, 103-0022 (JP)
(74) Representative: Kuhnen & Wacker Patent- und Rechtsanwaltsbüro PartG mbB

(57) **Abstract**

A power storage device (1) includes a safety valve (30) in a case member (21) made of metal. The case member (21) has a valve periphery roughened portion (24) around the safety valve on a case inner surface (23). The power storage device (1) includes a blockage preventing resin protrusion (40) that is a protrusion made of resin and protruding to the inside (EH). The blockage preventing resin protrusion (40) is joined to the valve periphery roughened portion (24) and reduces the possibility of a piece of the electrode body (50) blocking the safety valve (30). Nanocolumns (26) stand numerously on the valve periphery roughened portion (24), and the blockage preventing resin protrusion (40) is joined to the valve periphery roughened portion (24) such that a resin material (45) fills gaps between the nanocolumns (26) standing numerously.

## Description

### BACKGROUND

### Technical Field

The disclosure relates to a power storage device in which a safety valve is provided in a case member that constitutes a case, and a method of manufacturing the power storage device.

### Related Art

As a power storage device, a battery is known in which an electrode body is housed in a case made of metal, and a safety valve is provided in a case member that constitutes the case. When the internal pressure of the case exceeds the valve opening pressure, the safety valve opens and releases gas to the outside. One example of the battery is described in Patent Document 1 (see FIG. 1, FIG. 2, etc. of Patent Document 1).

### Patent Documents

Patent Document 1: Japanese unexamined patent application publication No. 2017-117750 (JP 2017-117750 A)

### SUMMARY

### Technical Problems

When the battery as described above is subjected to a nail penetration test, the temperature of the electrode body may rise rapidly and a part of the electrode body may break. Furthermore, if a broken piece of the electrode body moves to the vicinity of the safety valve and blocks the safety valve from inside, the opening of the safety valve may be hindered, or the release of gas through the opened safety valve may be hindered.

To solve this problem, the inventor considered installing a protrusion that protrudes inward, around the safety valve on a case inner surface of the case member with the safety valve, as an integral part of the case member, to prevent a broken piece of the electrode body from blocking the safety valve from inside or reduce the possibility of a broken piece of the electrode body blocking the safety valve from inside.

However, (1) when the case member is pressed to make a metal protrusion from a part of the case member, especially when the thickness of the case member is increased, the metal protrusion may not be formed in a desired shape by press forming if the height or size of the protrusion is to be increased. In addition, the case member is easily distorted and deformed during pressing, which is likely to cause a problem, such as a leak, when the case is sealed later. (2) On the other hand, when a metal protrusion formed separately is welded to the case member, there arise problems, such as easy deformation of the case member during welding and high cost. (3) Alternatively, the case member having a metal protrusion may be formed by casting. However, this method suffers from low productivity and high cost.

The disclosure was made in view of the situation as described above, and provides a power storage device that uses a metal case member with a resin protrusion firmly and integrally installed on the inner side of the case member, in place of a metal protrusion, and can prevent a broken piece of an electrode body from blocking a safety valve from inside or reduce the possibility of a broken piece of the electrode body blocking the safety valve from inside even when the electrode body breaks, thus allowing the safety valve to function properly. The disclosure also provides a method of manufacturing the power storage device.

### Means of Solving the Problems

(1) One aspect of the disclosure for solving the above problem is a power storage device including a case having a case member comprising metal, a safety valve provided in the case member, and an electrode body housed in the case. The case member has a case inner surface located on an inside, and a valve periphery roughened portion located around the safety valve on the case inner surface, and the power storage device further includes a blockage preventing resin protrusion that is a protrusion comprising resin and protruding to the inside. The blockage preventing resin protrusion is joined to the valve periphery roughened portion of the case inner surface and is configured to reduce the possibility of a broken piece of the electrode body blocking the safety valve from the inside when the electrode body breaks. In the power storage device, nanocolumns formed by joining particles derived from the metal that forms the case member together like strings of beads into the form of columns and having a height of 50 nm or greater stand numerously on the valve periphery roughened portion, and the blockage preventing resin protrusion is joined to the valve periphery roughened portion such that a resin material that forms the blockage preventing resin protrusion fills gaps between the nanocolumns standing numerously.

In the power storage device described above, the blockage preventing resin protrusion described above is installed around the safety valve on the case inner surface of the case member. Thus, even when the electrode body breaks in a nail penetration test, for example, a broken piece of the electrode body can be made less likely or unlikely to block the safety valve from inside, and the safety valve can open properly and properly release gas to the outside through the opened safety valve. Furthermore, the nano-level (nano-order) valve periphery roughened portion on which the nanocolumns stand numerously is provided on the case inner surface of the case member, and the blockage preventing resin protrusion is joined to the valve periphery roughened portion with the resin material filling gaps between the nanocolumns standing numerously. Thus, the joining strength of the case member and the blockage preventing resin protrusion can be increased.

Examples of the "power storage device" include secondary batteries, such as a lithium-ion secondary battery, sodium-ion secondary battery, and a calcium-ion secondary battery, and capacitors, such as a lithium-ion capacitor.

The "safety valve" may be a non-return type safety valve that itself breaks open when the internal pressure of the case exceeds the valve opening pressure, or may be a return type safety valve that opens when the internal pressure of the case exceeds the valve opening pressure, but closes when the internal pressure of the case becomes lower than the valve opening pressure. The safety valve may also be a temperature-release type safety valve that opens when the temperature of the safety valve exceeds a predetermined level.

Where the case member is configured to extend in the long-side direction, the "blockage preventing resin protrusion" may take the form of a pair of blockage preventing resin protrusions installed around the safety valve on both sides of the safety valve in the long-side direction, or may take the form of a pair of blockage preventing resin protrusions installed around the safety valve on both sides of the safety valve in the short-side direction. The blockage preventing resin protrusion may also take the form of a plurality of blockage preventing resin protrusions installed around the safety valve to surround the whole safety valve.

(2) Another aspect of the disclosure is a method of manufacturing a power storage device including a case having a case member comprising metal, a safety valve provided in the case member, and an electrode body housed in the case, wherein the case member has a case inner surface located on an inside, and a valve periphery roughened portion located around the safety valve on the case inner surface, wherein the power storage device further includes a blockage preventing resin protrusion that is a protrusion comprising resin and protruding to the inside, the blockage preventing resin protrusion being joined to the valve periphery roughened portion of the case inner surface and configured to reduce the possibility of a broken piece of the electrode body blocking the safety valve from the inside when the electrode body breaks, wherein nanocolumns formed by joining particles derived from the metal that forms the case member together like strings of beads into the form of columns and having a height of 50 nm or greater stand numerously on the valve periphery roughened portion, and wherein the blockage preventing resin protrusion is joined to the valve periphery roughened portion such that a resin material that forms the blockage preventing resin protrusion fills gaps between the nanocolumns standing numerously. The method includes a case roughening process of intermittently applying a pulsed laser beam to the case inner surface of the case member while shifting an irradiation position to form the valve periphery roughened portion on which the nanocolumns stand numerously, and a resin molding process of molding the blockage preventing resin protrusion while filling gaps between the nanocolumns standing numerously on the valve periphery roughened portion with the resin material.

In the method of manufacturing the power storage device described above, in the case roughening process, the pulsed laser beam is applied to the case inner surface of the case member as described above to form the nano-level valve periphery roughened portion on which the nanocolumns stand numerously. Thus, the valve periphery roughened portion can be easily provided on the case inner surface. Then, in the resin molding process, the blockage preventing resin protrusion is molded with the resin material filling gaps between the nanocolumns standing numerously on the valve periphery roughened portion, so that the blockage preventing resin protrusion firmly joined to the valve periphery roughened portion can be provided.

(3) In the method of manufacturing the power storage device described in (2) above, the case member has an insertion hole, and the power storage device further includes a terminal member inserted through the insertion hole of the case member, and a terminal resin member that is joined to the case member and the terminal member while insulating the case member and the terminal member from each other to fix the terminal member to the case member. The resin molding process includes molding the terminal resin member joined to the case member and the terminal member and molding the blockage preventing resin protrusion joined to the case member in a condition where the terminal member is inserted through the insertion hole of the case member.

In the power storage device including the terminal resin member that fixes the terminal member to the case member, the terminal resin member and the blockage preventing resin protrusion may be molded separately. In contrast, in the method of manufacturing the power storage device described above, the terminal resin member and the blockage preventing resin protrusion are molded in one step, so that the terminal resin member and the blockage preventing resin protrusion can be provided easily and inexpensively. The terminal resin member and the blockage preventing resin protrusion may be molded using the same resin material, or may be molded using different resin materials.

### BRIEF DESCRIPTION OF THE DRAWINGS

FIG. 1 is a perspective view of a battery according to a first embodiment;
FIG. 2 is a partial cross-sectional view of the battery according to the first embodiment, taken along the battery height direction and the battery width direction;
FIG. 3 is a plan view of a safety valve and its vicinity of the battery according to the first embodiment as seen from the inside of a case lid member;
FIG. 4 is a cross-sectional view of the safety valve and its vicinity of the battery according to the first embodiment as seen in the direction of arrows A-A in FIG. 3;
FIG. 5 is a partially enlarged cross-sectional view showing an enlarged view of a junction between a valve periphery roughened portion, etc. of a case inner surface of the case lid member and a blockage preventing resin protrusion, etc. according to the first embodiment;
FIG. 6 is a flowchart of a method of manufacturing the battery according to the first embodiment;
FIG. 7 is an explanatory view showing the manner of forming a plurality of bowl-shaped recesses and nanocolumns standing numerously on the bowl-shaped recesses through scanning with a pulsed laser beam in a case roughening step (or terminal roughening step), in connection with the method of manufacturing the battery according to the first embodiment;
FIG. 8 is an explanatory view showing positive and negative terminal members respectively inserted through insertion holes of the case lid member in a resin molding step, in connection with the method of manufacturing the battery according to the first embodiment;
FIG. 9 is an explanatory view showing a pair of terminal resin members and a pair of blockage preventing resin protrusions that are molded in the resin molding step, in connection with the method of manufacturing the battery according to the first embodiment;
FIG. 10 is a plan view of a safety valve and its vicinity of a battery according to a second embodiment as seen from the inside of a case lid member;
FIG. 11 is a cross-sectional view of the safety valve and its vicinity of the battery according to the second embodiment as seen in the direction of arrows B-B in FIG. 10;
FIG. 12 is a plan view of a safety valve and its vicinity of a battery according to a third embodiment as seen from the inside of a case lid member; and
FIG. 13 is a cross-sectional view of the safety valve and its vicinity of the battery according to the third embodiment as seen in the direction of arrows C-C in FIG. 12.

### DETAILED DESCRIPTION OF THE EXEMPLARY EMBODIMENTS

### First Embodiment

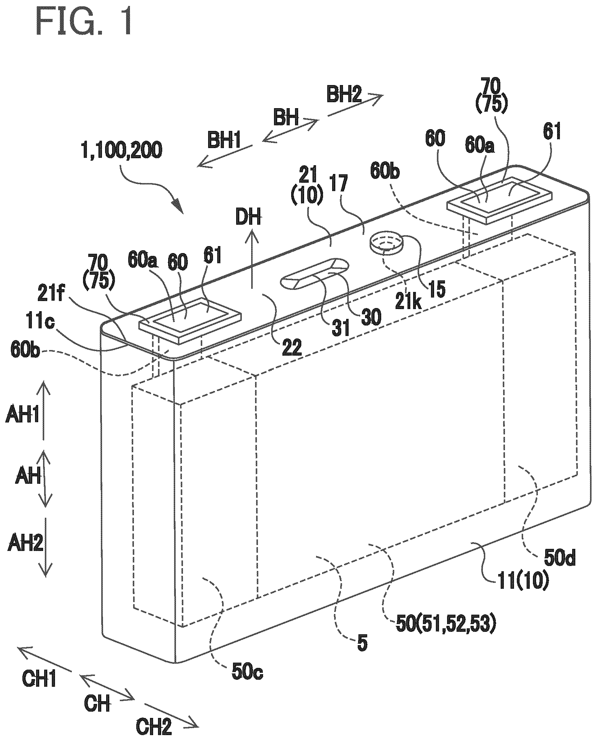

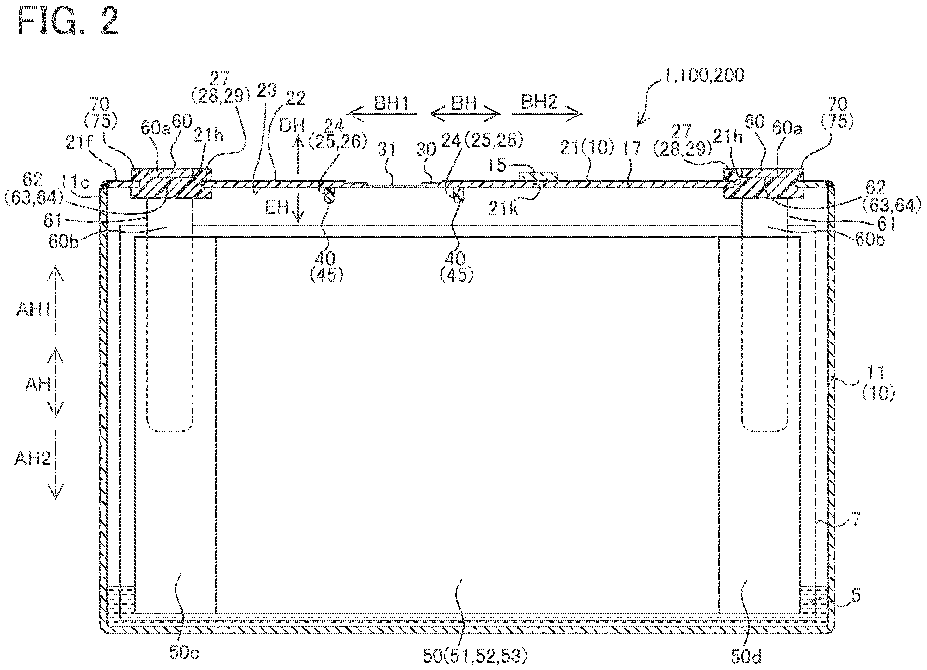

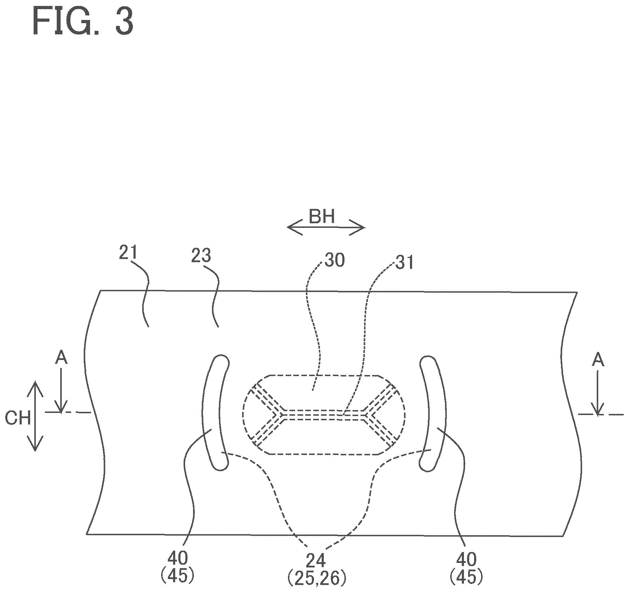

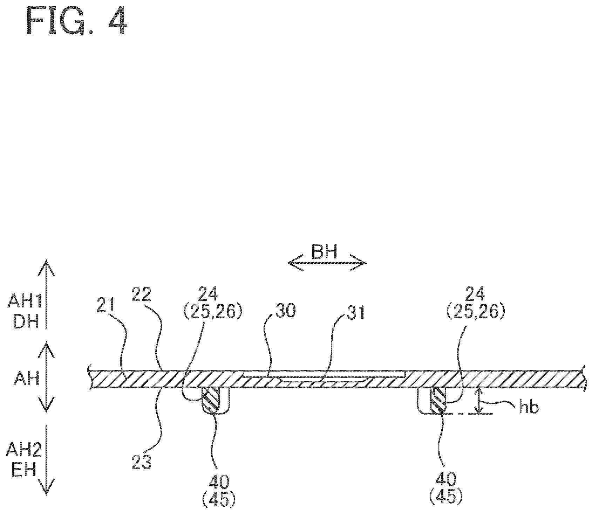

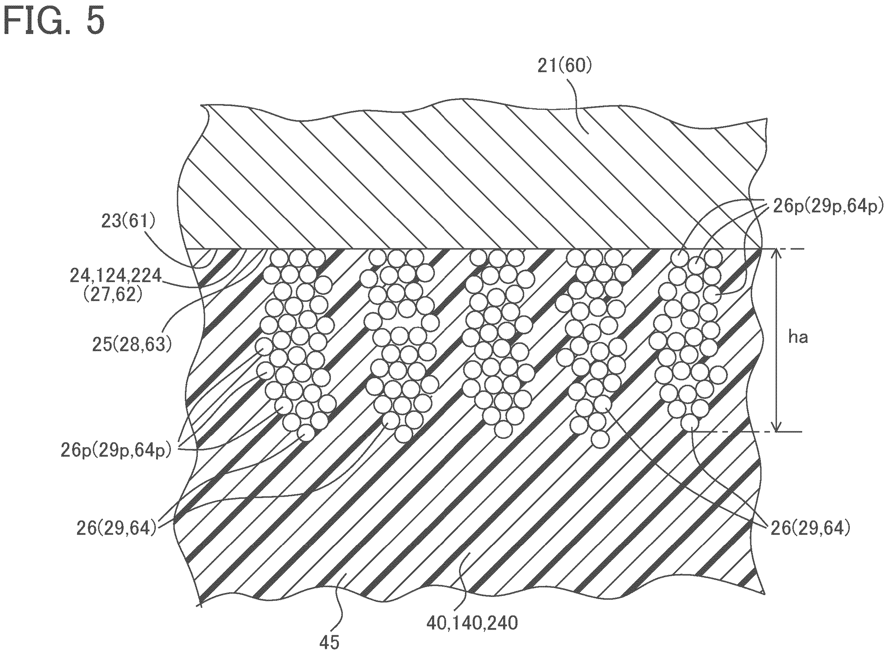

In the following, a first embodiment of the disclosure will be described with reference to the drawings. FIG. 1 is a perspective view of a battery (one example of the power storage device of the disclosure) 1 according to the first embodiment, and FIG. 2 is a partial cross-sectional view of the battery 1. FIG. 3 is a plan view of a safety valve 30 and its vicinity of the battery 1 as seen from the inside EH, and FIG. 4 is a cross-sectional view taken in the direction of arrows A-A in FIG. 3. FIG. 5 is a partially enlarged cross-sectional view of a junction between a valve periphery roughened portion 24 of a case inner surface 23 of a case lid member 21 and a blockage preventing resin protrusion 40. In the following description, the battery height direction AH, battery width direction BH, and battery thickness direction CH of the battery 1 are defined as the directions indicated in FIG. 1 and FIG. 2.

The battery 1 is a sealed lithium-ion secondary battery of a rectangular (rectangular parallelepiped) shape, which is installed on a vehicle, such as a hybrid vehicle, plug-in hybrid vehicle, or an electric vehicle. The battery 1 consists of a case 10 made of metal and provided with the safety valve 30, an electrode body 40 and electrolyte 5 housed in the case 10, positive and negative terminal members 60 fixed to the case 10 via respective terminal resin members 70, and so forth. The electrode body 50 is covered with an insulating holder 7 in the case 10. The insulating holder 7 is made from an insulating film and shaped like a bag that opens to the upper side AH1 in the battery height direction AH.

The electrode body 50 is of a rectangular parallelepiped, stacked type, and has a plurality of rectangular positive electrode sheets 51 and a plurality of rectangular negative electrode sheets 52 alternately stacked in the battery thickness direction CH via rectangular separators 53 each made from a porous resin film. In the electrode body 50, on one side BH1 in the battery width direction BH, current collecting foils of the respective positive electrode sheets 51 are superposed in the battery thickness direction CH to form a positive current collector 50c. The terminal member 60 of the positive electrode is conductively connected to the positive current collector 50c. Also in the electrode body 50, on the other side BH2 in the battery width direction BH, current collecting foils of the respective negative electrode sheets 52 are superposed in the battery thickness direction CH to form a negative current collector 50d. The terminal member 60 of the negative electrode is conductively connected to the negative current collector 50d.

The case 10 is shaped like a rectangular parallelepiped box and made of metal (aluminum in the first embodiment). The case 10 consists of a case body 11 that is in the form of a rectangular tube with a bottom and a rectangular opening portion 11c and houses the electrode body 50 therein, and a case lid member 21 in the form of a rectangular plate that closes the opening portion 11c of the case body 11. In the first embodiment, the case lid member 21 corresponds to the "case member" mentioned above, and has two major surfaces, i.e., a case outer surface 22 facing to the outside DH (the upper side AH1) and a case inner surface 23 facing to the inside EH (the lower side AH2 in the battery height direction AH). The opening portion 11c of the case body 11 and a peripheral portion 21f of the case lid member 21 are hermetically welded together over the entire circumference thereof. The case lid member 21 is provided with a liquid inlet 21k, and the liquid inlet 21k is hermetically sealed with a disc-shaped sealing member 15 made of aluminum.

In the case lid member 21 of the case 10, the safety valve 30 is formed integrally with the case lid member 21 (that is, a part of the case lid member 21 provides the safety valve 30). The safety valve 30 is in the form of a plate having an elongated circular shape in plan view (as seen from the upper side AH1) and having a smaller thickness than the case lid member 21. On the outside DH (the upper side AH1), the safety valve 30 has a portion 31 to be broken, hereinafter referred to as a breaking portion 31, in the form of a V-shaped groove formed in a predetermined shape. The major axis of the safety valve 30 (measured in the battery width direction BH) is 15 mm, and the minor axis of the safety valve 30 (measured in the battery thickness direction CH) is 5 mm. The breaking portion 31 breaks and the safety valve 30 opens when the internal pressure of the case 10 exceeds the valve opening pressure. Then, gas in the case 10 is released to the outside of the case 10 through the safety valve 30 thus broken.

Blockage preventing resin protrusions 40 are joined to portions of the case inner surface 23 of the case lid member 21 around the safety valve 30 (see FIG. 3, FIG. 4, and FIG. 2). Specifically, the case inner surface 23 of the case lid member 21 has a pair of valve periphery roughened portions 24 around the safety valve 30. The valve periphery roughened portions 24 are provided around the safety valve 30 on the case inner surface 23 on one side BH1 and the other side BH2, respectively, in the long-side direction of the case lid member 21 (battery width direction BH) such that they generally extend in the short-side direction of the case lid member 21 (the battery thickness direction CH).

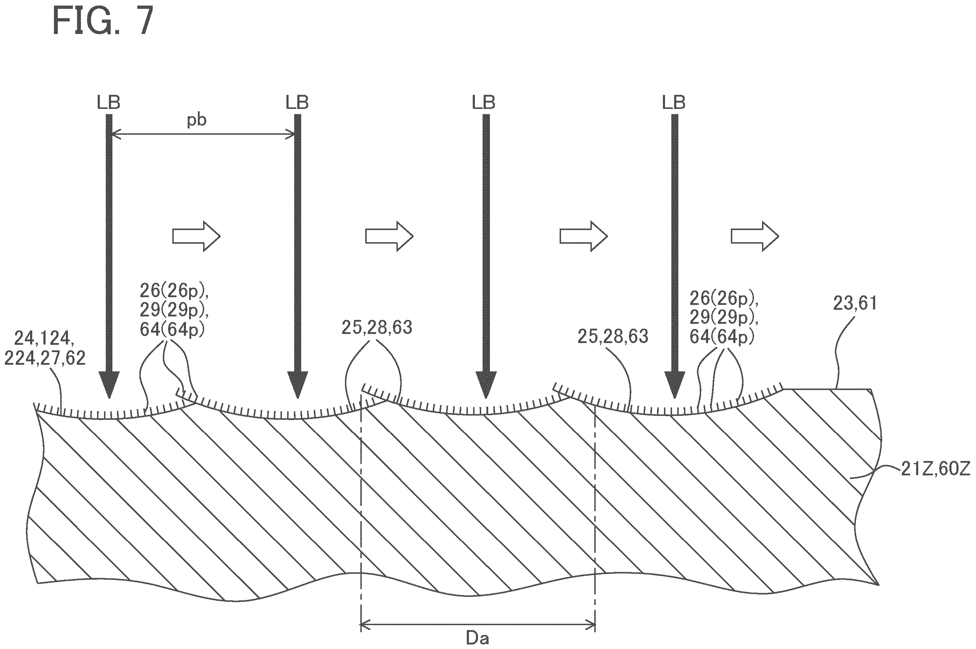

Each of the valve periphery roughened portions 24 is roughened with a pulsed laser beam LB which will be described below, to provide a nano-level nano-roughened portion. Specifically, in the valve periphery roughened portion 24, numerous bowl-shaped recesses 25 that are dented in the shape of bowls or impact craters and have a diameter Da of 30 µm to 300 µm (the diameter Da is generally equal to 80 µm in the first embodiment) are arranged while partially overlapping (see FIG. 7). On the bowl-shaped recesses 25, nanocolumns 26 formed by joining particles 26p derived from metal that forms the case lid member 21 together like strings of beads into the form of columns and having a height ha of 50 nm or greater (the height ha is generally equal to 200 nm in the first embodiment) stand together in large numbers (see FIG. 5 and FIG. 7). The metal that forms the case lid member 21 is aluminum, as described above, and the nanocolumn 26 is made up of the particles 56p of aluminum and aluminum oxide.

The blockage preventing resin protrusions 40 as protrusions made of resin and protruding to the inside EH are respectively joined to the pair of valve periphery roughened portions 24 of the case inner surface 23. Specifically, the two blockage preventing resin protrusions 40, which are located on one side BH1 and the other side BH2 in the long-side direction of the case lid member 21 (the battery width direction BH) around the safety valve 30, generally extend in the short-side direction of the case lid member 21 (the battery thickness direction CH) and respectively protrude to the inside EH. With the blockage preventing resin protrusions 40 thus provided, even when a part of the electrode body 50 breaks and a broken piece of the electrode body 50 moves to the vicinity of the safety valve 30, the blockage preventing resin protrusion or protrusions 40 contact the piece of the electrode body 50 to prevent the piece of the electrode body 50 from blocking the safety valve 30 from the inside EH to the outside DH or reduce the possibility of the piece of the electrode body 50 blocking the safety valve 30 from the inside EH to the outside DH.

The height hb of the blockage preventing resin protrusion 40 is preferably within the range of 1.0 mm to 5.0 mm. In the first embodiment, the height hb is equal to 2.0 mm. By making the height hb of the blockage preventing resin protrusion 40 equal to or greater than 1.0 mm (hb ≥ 1.0 mm), the blockage preventing resin protrusion 40 can more effectively prevent a piece of the electrode body 50 from blocking the safety valve 30 or reduce the possibility of a piece of the electrode body 50 blocking the safety valve 30. On the other hand, by making the height hb of the blockage preventing resin protrusion 40 equal to or less than 5.0 mm (hb ≤ 5.0 mm), the distance from the case inner surface 23 to the electrode body 50 can be shortened (space can be reduced), and a relatively large electrode body 50 can be housed in the case 10. Therefore, the battery capacity per unit volume of the battery 1 can be increased.

The blockage preventing resin protrusion 40 is made of a resin material 45 including a thermoplastic main resin (polyphenylene sulfide (PPS) in the first embodiment), a thermoplastic elastomer (thermoplastic polyurethane elastomer in the first embodiment), and a filler (fibrous glass filler in the first embodiment). With the resin material 45 filling gaps between the nanocolumns 26 standing numerously on the valve periphery roughened portion 24 of the case inner surface 23, the blockage preventing resin protrusion 40 is joined with strong joining force to the valve periphery roughened portion 24.

Next, the relationship between the case lid member 21 and terminal member 60, and the terminal resin member 70, will be described (see FIG. 1 and FIG. 2). Rectangular insertion holes 21h are respectively provided in portions of the case lid member 21 near its ends on one side BH1 and the other side BH2 in the battery width direction BH. The terminal member 60 of the positive electrode made of aluminum is inserted through the insertion hole 21h on the one side BH1, and the terminal resin member 70 of the positive electrode is hermetically and firmly joined to the case lid member 21 and the terminal member 60 while insulating the case lid member 21 and the terminal member 60 from each other, to fix the terminal member 60 to the case lid member 21. The terminal member 60 of the negative electrode made of copper is inserted through the insertion hole 21h on the other side BH2, and the terminal resin member 70 of the negative electrode is hermetically and firmly joined to the case lid member 21 and the terminal member 60 while insulating the case lid member 21 and the terminal member 60 from each other, to fix the terminal member 60 to the case lid member 21.

Each terminal member 60 is formed by pressing a metal plate (an aluminum plate for the positive electrode, a copper plate for the negative electrode). The terminal member 60 consists of a terminal top plate 60a in the form of a rectangular plate located on the outside DH (the upper side AH1) of the case lid member 21 and extending in the battery width direction BH and the battery thickness direction CH, and a terminal extension 60b extending from the terminal top plate 60a to the inside EH (the lower side AH2) of the case lid member 21. The terminal extension 60b is bent at an end portion of the terminal top plate 60a on one side CH1 in the battery thickness direction CH and extends to the lower side AH2 through the insertion hole 21h of the case lid member 21, and further through the terminal resin member 70. The terminal extension 60b of the positive electrode is welded at its distal end portion on the lower side AH2 to the positive current collector 50c of the electrode body 50. On the other hand, the terminal extension 60b of the negative electrode is welded at its distal end portion on the lower side AH2 to the negative current collector 50d of the electrode body 50.

The terminal resin member 70 is joined to a portion of a terminal surface 61 of the terminal member 60 near the insertion hole 21h. Specifically, the terminal surface 61 has a terminal roughened portion 62 in the vicinity of the insertion hole 21h. The terminal roughened portion 62 is formed as a nano-level nano-roughened portion, like the valve periphery roughened portion 24 of the case lid member 21 described above. More specifically, numerous bowl-shaped recesses 63 are arranged in the terminal roughened portion 62 (see FIG. 7), and nanocolumns 64 formed by joining particles 64p derived from metal that forms the terminal member 60 together like strings of beads into the form of columns and having a height ha of 50 nm or greater (the height ha is generally equal to 200 nm in the first embodiment) stand together in large numbers on each bowl-shaped recess 63 (see FIG. 5 and FIG. 7). The metal that forms the terminal member 60 of the positive electrode is aluminum as described above, and the nanocolumn 64 of the positive electrode is made up of the particles 64p of aluminum and aluminum oxide. On the other hand, the metal that forms the terminal member 60 of the negative electrode is copper as described above, and the nanocolumn 64 of the negative electrode is made up of the particles 64p of copper and copper oxide.

The terminal resin member 70 is also joined to a portion of the case lid member 21 near the insertion hole 21h. Specifically, the case lid member 21 has a hole vicinity roughened portion 27 in the vicinity of the insertion hole 21h. The hole vicinity roughened portion 27 is formed as a nano-level nano-roughened portion, like the valve periphery roughened portion 24 of the case lid member 21 and the terminal roughened portion 62 of the terminal member 60. More specifically, the hole vicinity roughened portion 27 has numerous bowl-shaped recesses 28 (see FIG. 7), and nanocolumns 29 formed by joining particles 29p derived from metal (specifically, aluminum) that forms the case lid member 21 together like strings of beads into the form of columns and having a height ha of 50 nm or greater (the height ha is generally equal to 200 nm in the first embodiment) stand together in large numbers on each bowl-shaped recess 28 (see FIG. 5 and FIG. 7).

The terminal resin member 70 is made of a resin material 75 that is different from the resin material 45 that makes up the blockage preventing resin protrusion 40. The resin material 75 includes a thermoplastic main resin (perfluoroalkoxyalkane (PFA) in the first embodiment), a thermoplastic elastomer (thermoplastic polyurethane elastomer in the first embodiment), and a filler (fibrous glass filler in the first embodiment). The terminal resin member 70 is hermetically joined with strong joining force to the terminal roughened portion 62 of the terminal member 60 such that the above resin material 75 fills gaps between the nanocolumns 64 standing numerously on the terminal roughened portion 62. The terminal resin member 70 is also hermetically joined with strong joining force to the hole vicinity roughened portion 27 of the case lid member 21 such that the resin material 75 fills gaps between the nanocolumns 29 standing numerously on the hole vicinity roughened portion 27.

In the battery 1 of the first embodiment, the blockage preventing resin protrusions 40 are provided around the safety valve 30 on the case inner surface 23 of the case lid member 21. Therefore, even if the electrode body 50 breaks in a nail penetration test or the like, a broken piece of the electrode body 50 can be made less likely or unlikely to block the safety valve 30 from the inside EH to the outside DH, allowing the safety valve 30 to open properly and properly release gas to the outside through the opened safety valve 30. Furthermore, the nano-level valve periphery roughened portions 24 on which the nanocolumns 26 stand numerously are provided on the case inner surface 23 of the case lid member 21, and the blockage preventing resin protrusions 40 are joined to the valve periphery roughened portions 24 with the resin material 45 filling gaps between the nanocolumns 26 standing numerously. Therefore, the joining strength of the case lid member 21 and the blockage preventing resin protrusions 40 can be increased.

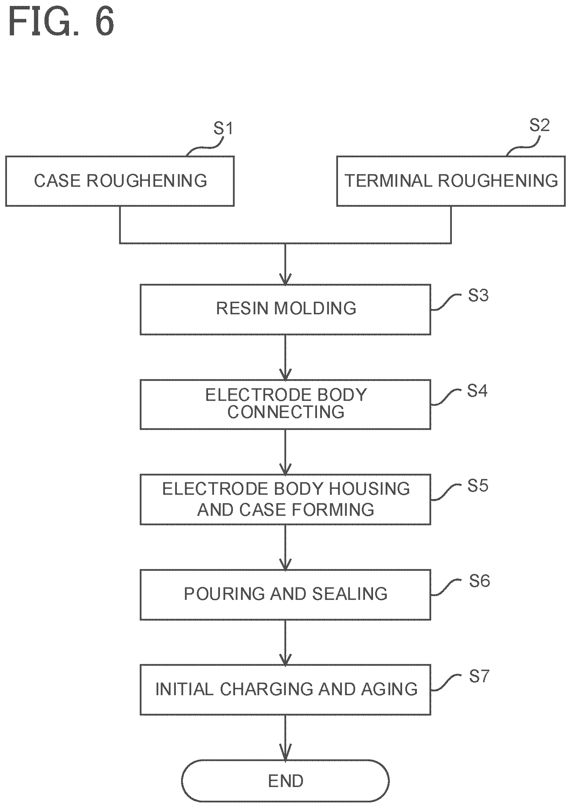

Next, a method of manufacturing the battery 1 will be described (see FIG. 6 to FIG. 9). First, a case lid member 21Z before roughening is prepared. The case lid member 21Z before roughening is obtained by pressing an aluminum plate. The safety valve 30 is also formed in the case lid member 21Z by the pressing process. Terminal members 60Z before roughening are also prepared. The terminal members 60Z before roughening are obtained by pressing metal plates (an aluminum plate for the positive electrode and a copper plate for the negative electrode).

Then, in a case roughening step S1 (see FIG. 6), a pulsed laser beam LB is intermittently applied to predetermined portions of the case inner surface 23 of the above case lid member 21Z around the safety valve 30 while shifting the irradiation position, to form a pair of valve periphery roughened portions 24 in which numerous bowl-shaped recesses 25 are arranged while partially overlapping (see FIG. 7). Also, a pulsed laser beam LB is intermittently applied to predetermined portions of the case lid member 21Z near the pair of insertion holes 21h while shifting the irradiation position, to form a pair of hole vicinity roughened portions 27 in which numerous bowl-shaped recesses 28 are arranged while partially overlapping. The irradiation conditions of the laser beam are set as follows: the wavelength is 1064 nm, the peak power is 5 kW, the pulse width is 150 ns, the pitch pb is 75 µm, and the spot diameter Da is 80 µm.

In the portions of the case lid member 21Z which are irradiated with the pulsed laser beam LB, metal (more specifically, aluminum) near the surface is melted and further turned into vapor. As the temperature of the vapor then decreases, the vapor turns into the particles 26p, 29p of aluminum and aluminum oxide, which are then deposited on the bowl-shaped recesses 25, 28. By intermittently applying the pulsed laser beam LC to the case lid member 21Z while shifting the irradiation position, the particles 26p, 29p are deposited and joined together like strings of beads into the form of columns, to form the nanocolumns 26, 29 standing together in large numbers (see FIG. 7 and FIG. 5).

Meanwhile, in a terminal roughening step S2 (see FIG. 6), a pulsed laser beam LB is intermittently applied to predetermined portions of the positive and negative terminal members 60Z described above, respectively, while shifting the irradiation position, to form the terminal roughened portions 62 in which numerous bowl-shaped recesses 63 are arranged while partially overlapping (see FIG. 7). On each of the bowl-shaped recesses 63, the nanocolumns 64 formed by depositing and joining the particles 64p (the particles of aluminum and aluminum oxide on the positive electrode, the particles of copper and copper oxide on the negative electrode) together like strings of beads into the form of columns stand together in large numbers (see FIG. 7 and FIG. 5). The irradiation conditions of the laser beam for the terminal member 60 of the positive electrode are the same as those in the case roughening step S1. On the other hand, the irradiation conditions of the laser beam for the terminal member 60 of the negative electrode are set as follows: the wavelength is 1064 nm, the peak power is 20 kW, the pulse width is 50 ns, the pitch pb is 60 µm, and the spot diameter Da is 75 µm.

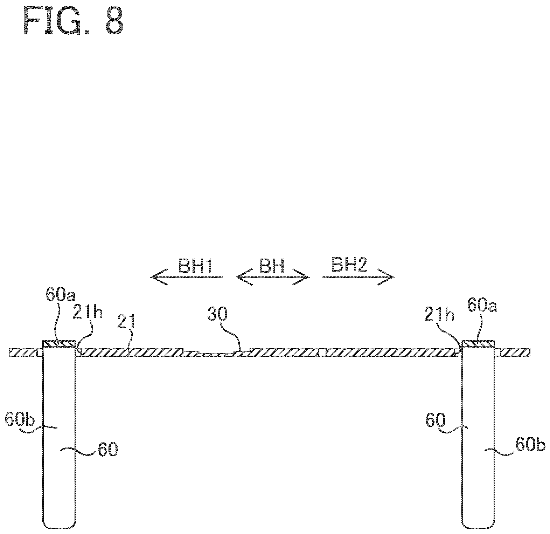

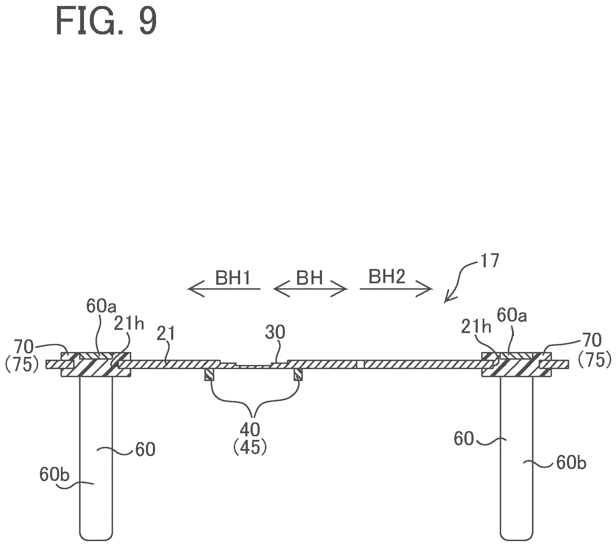

Next, in a resin molding step S3 (see FIG. 6), with the positive and negative terminal members 60 inserted through the pair of insertion holes 21h of the case lid member 21, a pair of terminal resin members 70 joined to the case lid member 21 and the terminal members 60 are molded, and a pair of blockage preventing resin protrusions 40 joined to the case lid member 21 are molded (see FIG. 8 and FIG. 9).

Specifically, the resin molding step S3 is carried out using a molding die (not shown) having an upper die and a lower die. First, the case lid member 21 is placed at a predetermined position in the lower die, and the positive and negative terminal members 60 are respectively inserted through the pair of insertion holes 21h of the case lid member 21 (see FIG. 8). Then, the upper die is moved toward the lower die to close the molding die.

The molten resin into which the resin material 75 has melted is then injected into two cavities used for molding the terminal resin members 70, and the molten resin into which the resin material 45 has melted is injected into two cavities used for molding the blockage preventing resin protrusions 40. At this time, the molten resin of the resin material 75 fills gaps between the nanocolumns 29 standing numerously on the hole vicinity roughened portions 27 of the case lid member 21 and gaps between the nanocolumns 64 standing numerously on the terminal roughened portions 62 of the terminal members 60. Also, the molten resin of the resin material 45 fills gaps between the nanocolumns 26 standing numerously on the valve periphery roughened portions 24 of the case lid member 21. Thus, the pair of terminal resin members 70 firmly and hermetically joined to the hole vicinity roughened portions 27 of the case lid member 21 and the terminal roughened portions 62 of the terminal members 60 are formed by insert molding. In addition, the pair of blockage preventing resin protrusions 40 firmly joined to the valve periphery roughened portions 24 of the case lid member 21 are formed by insert molding (see FIG. 9). Then, a lid assembly 17 with the terminal resin members 70 and blockage preventing resin protrusions 40 thus molded is removed from the molding die.

Next, in an electrode body connecting step S4 (see FIG. 6), the electrode body 50 obtained by stacking the positive electrode sheets 51, negative electrode sheets 52, and separators 53 is prepared, and the terminal extension 60b of the terminal member 60 of the positive electrode as a part of the lid assembly 17 described above is ultrasonically welded to the positive current collector 50c of the electrode body 50. The terminal extension 60b of the terminal member 60 of the negative electrode as a part of the lid assembly 17 is also ultrasonically welded to the negative current collector 50d of the electrode body 50. The electrode body 50 is then wrapped with the bag-like insulating holder 7.

Then, in an electrode body housing and case forming step S5, the case body 11 is prepared, the electrode body 50 covered with the insulating holder 7 is inserted into the case body 11, and the opening portion 11c of the case body 11 is closed with the case lid member 21. Then, the opening portion 11c of the case body 11 and the peripheral portion 21f of the case lid member 21 are laser welded hermetically over the entire periphery to form the case 10 with the electrode body 50 housed inside.

Then, in a pouring and sealing step S6, after inserting a pouring nozzle of a pouring device (not shown) into the liquid inlet 21k, the electrolyte 5 is jetted out from the tip of the pouring nozzle in the case 10 and poured into the case 10, so that the electrode body 50 is impregnated with the electrolyte 5. The liquid inlet 21k is then covered from the outside with the sealing member 15, and the sealing member 15 is laser welded hermetically to the case 10. Then, in an initial charging and aging step S7, a charging device (not shown) is connected to the battery 1 to perform initial charging on the battery 1. Then, the initially charged battery 1 is left to stand for a predetermined time so that the battery 1 is aged. In this manner, the battery 1 is completed.

In the method of manufacturing the battery 1 described above, in the case roughening step S1, the nano-level valve periphery roughened portions 24 on which the nanocolumns 26 stand numerously are formed by irradiating the case inner surface 23 of the case lid member 21 with the pulsed laser beam LB as described above, so that the valve periphery roughened portions 24 can be easily provided on the case inner surface 23. Then, in the resin molding step S3, the blockage preventing resin protrusions 40 are molded with the resin material 45 filling gaps between the nanocolumns 26 standing numerously on the valve periphery roughened portions 24, so that the blockage preventing resin protrusions 40 firmly joined to the valve periphery roughened portions 24 can be provided.

Furthermore, in the first embodiment, the terminal resin members 70 and the blockage preventing resin protrusions 40 are molded in one step, so that the terminal resin members 70 and the blockage preventing resin protrusions 40 can be provided easily and inexpensively.

### Second Embodiment

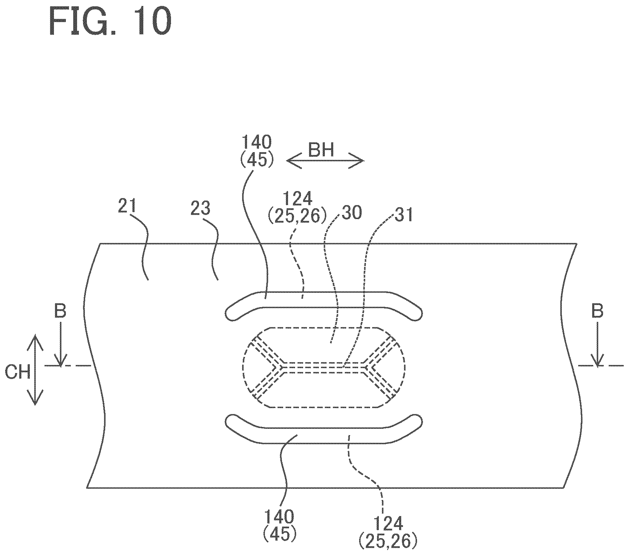

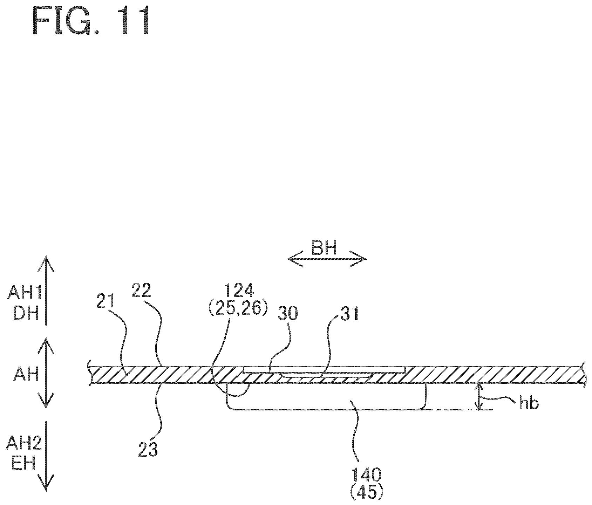

Next, a second embodiment will be described (see FIG. 10 and FIG. 11). Description of portions or components similar to those of the first embodiment will be omitted or simplified. In the battery 1 of the first embodiment, the blockage preventing resin protrusions 40 are provided around the safety valve 30 on the case inner surface 23 on both sides of the safety valve 30 in the long-side direction of the case lid member 21 (the battery width direction BH). On the other hand, in a battery (one example of the power storage device of the disclosure) 100 of the second embodiment, blockage preventing resin protrusions 140 are provided around the safety valve 30 on the case inner surface 23 on both sides of the safety valve 30 in the short-side direction of the case lid member 21 (the battery thickness direction CH).

Specifically, the case inner surface 23 of the case lid member 21 has a pair of valve periphery roughened portions 124 around the safety valve 30. The valve periphery roughened portions 124 are respectively provided around the safety valve 30 on the case inner surface 23, on one side CH1 and the other side CH2 in the short-side direction of the case lid member 21 (the battery thickness direction CH), such that they generally extend in the long-side direction of the case lid member 21 (the battery width direction BH). Each of the valve periphery roughened portions 124 is a nano-level nano-roughened portion similar to the valve periphery roughened portion 24 of the first embodiment. Namely, the valve periphery roughened portion 124 has numerous bowl-shaped recesses 25 (see FIG. 7), and the nanocolumns 26 stand together in large numbers on each of the bowl-shaped recesses 25 (see FIG. 5 and FIG. 7).

The blockage preventing resin protrusions 140 that protrude to the inside EH are respectively joined to the pair of valve periphery roughened portions 124 of the case inner surface 23. Specifically, the pair of blockage preventing resin protrusions 140, which are located around the safety valve 30 on one side CH1 and the other side CH2 in the short-side direction of the case lid member 21 (the battery thickness direction CH), generally extend in the long-side direction of the case lid member 21 (the battery width direction BH) and protrude to the inside EH. When the electrode body 50 breaks, the blockage preventing resin protrusions 140 of the second embodiment can prevent a piece of the electrode body 50 from blocking the safety valve 30 from the inside EH to the outside DH or reduce the possibility of a piece of the electrode body 50 blocking the safety valve 30 from the inside EH to the outside DH. Also, the blockage preventing resin protrusions 140 are joined with strong joining force to the valve periphery roughened portions 124 with the resin material 45 filling gaps between the nanocolumns 26 standing numerously on the valve periphery roughened portions 124 of the case inner surface 23.

In the battery 100 of the second embodiment, too, the blockage preventing resin protrusions 140 are provided around the safety valve 30 on the case inner surface 23 of the case lid member 21. Therefore, a broken piece of the electrode body 50 can be made less likely or unlikely to block the safety valve 30, so that the safety valve 30 functions properly. Furthermore, the blockage preventing resin protrusions 140 are joined to the valve periphery roughened portions 124 with the resin material 45 filling gaps between the nanocolumns 26 standing numerously on the valve periphery roughened portions 124. Therefore, the joining strength of the case lid member 21 and the blockage preventing resin protrusions 140 can be increased.

The battery 100 of the second embodiment can be manufactured substantially in the same manner as the battery 1 of the first embodiment. Accordingly, substantially the same effects as those provided by the method of manufacturing the battery 1 of the first embodiment can be provided by the method of manufacturing the battery 100 of the second embodiment.

In the pouring and sealing step S6 of the first embodiment, when the electrolyte 5 is jetted out from the tip of the pouring nozzle inserted in the liquid inlet 21k to one side BH1 and the other side BH2, respectively, in the battery width direction BH, the electrolyte 5 may hit the blockage preventing resin protrusions 40 that extend in the battery thickness direction CH, causing bubbles to form or causing the electrolyte 5 to adhere to the case inner surface 23 of the case lid member 21. In contrast, in the second embodiment, the blockage preventing resin protrusions 140 are provided on both sides of the safety valve 30 in the battery thickness direction CH to extend in the battery width direction BH; therefore, the electrolyte 5 jetted out from the tip of the pouring nozzle in the battery width direction BH is less likely or unlikely to hit the blockage preventing resin protrusions 140. This leads to such advantages that bubbles are less likely or unlikely to form and the electrolyte 5 is less likely or unlikely to adhere to the case inner surface 23.

### Third Embodiment

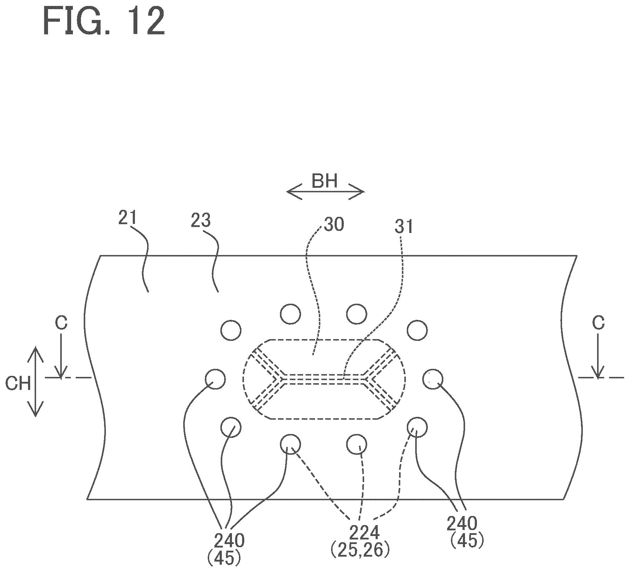

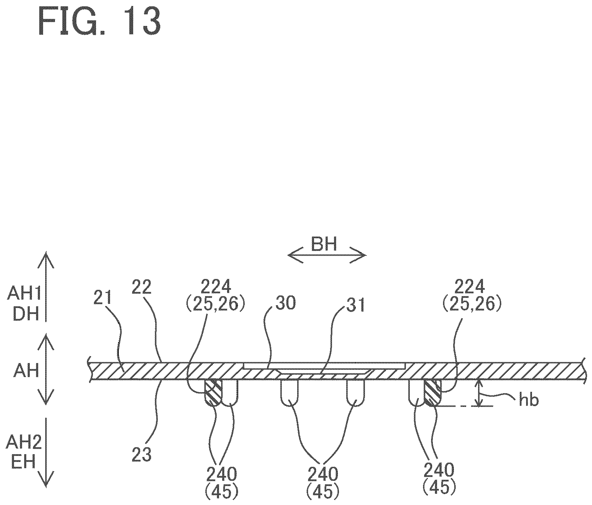

Next, a third embodiment will be described (see FIG. 12 and FIG. 13). Description of portions or components similar to those of the first embodiment or the second embodiment will be omitted or simplified. In a battery (one example of the power storage device of the disclosure) 200 of the third embodiment, the configuration of blockage preventing resin protrusions 240 is different from that of the blockage preventing resin protrusions 40, 140 of the first and second embodiments, and a plurality of dot-like blockage preventing resin protrusions 240 is provided around the safety valve 30 on the case inner surface 23.

Specifically, the case inner surface 23 of the case lid member 21 has a plurality of dot-like valve periphery roughened portions 224 disposed around the safety valve 30 and spaced apart from each other over the entire periphery. Like the valve periphery roughened portions 24, 124 of the first and second embodiments, each of the valve periphery roughened portions 224 is formed as a nano-level nano-roughened portion. That is, the valve periphery roughened portion 224 has numerous bowl-shaped recesses 25 (see FIG. 7), and the nanocolumns 26 stand together in large numbers on each of the bowl-shaped recesses 25 (see FIG. 5 and FIG. 7).

The dot-like blockage preventing resin protrusions 240 that protrude to the inside EH are respectively joined to the valve periphery roughened portions 224 of the case inner surface 23. Specifically, the blockage preventing resin protrusions 240 are arranged around the safety valve 30 while being spaced from each other over the entire periphery, and respectively protrude to the inside EH. When the electrode body 50 breaks, the blockage preventing resin protrusions 240 of the third embodiment can also prevent a piece of the electrode body 50 from blocking the safety valve 30 from the inside EH to the outside DH or reduce the possibility of a piece of the electrode body 50 blocking the safety valve 30 from the inside EH to the outside DH. Also, the blockage preventing resin protrusions 240 are joined with strong joining force to the valve periphery roughened portions 224 with the resin material 45 filling gaps between the nanocolumns 26 standing numerously on the valve periphery roughened portions 224 of the case inner surface 23.

In the battery 200 of the third embodiment, too, the blockage preventing resin protrusions 240 are provided around the safety valve 30 on the case inner surface 23 of the case lid member 21. Therefore, the blockage preventing resin protrusions 240 can prevent a broken piece of the electrode body 50 from blocking the safety valve 30 or reduce the possibility of a broken piece of the electrode body 50 blocking the safety valve 30, so that the safety valve 30 functions properly. Furthermore, the blockage preventing resin protrusions 240 are joined to the valve periphery roughened portions 224 such that the resin material 45 fills gaps between the nanocolumns 26 standing numerously on the valve periphery roughened portions 224. Therefore, the joining strength of the case lid member 21 and the blockage preventing resin protrusions 240 can be increased.

The battery 200 of the third embodiment can be manufactured in substantially the same manner as the batteries 1, 100 of the first and second embodiments. Accordingly, substantially the same effects as those provided by the methods of manufacturing the batteries 1, 100 of the first and second embodiments can be provided by the method of manufacturing the battery 200 of the third embodiment.

While the disclosure has been described in the light of the first, second, and third embodiments, it is to be understood that the disclosure is not limited to the first, second, and third embodiments, but may be applied by making changes as needed, without departing from the principle of the disclosure.

### Reference Signs List

- 1, 100, 200: Battery (Power storage device)
- 10: Case
- 21: Case lid member (Case member)
- 21Z: Case lid member (before roughening)
- 21h: Insertion hole
- 23: Case inner surface (of case lid member)
- 24, 124, 224: Valve periphery roughened portion (of case inner surface)
- 26: Nanocolumn
- 26p: Particle
- 30: Safety valve
- 40, 140, 240: Blockage preventing resin protrusion
- 45: Resin material (that forms blockage preventing resin protrusion)
- 50: Electrode body
- 60: Terminal member
- 60Z: Terminal member (before roughening)
- 70: Terminal resin member
- 75: Resin material (that forms terminal resin member)
- DH: Outside (of case lid member)
- EH: Inside (of case lid member)
- LB: Pulsed laser beam
- S1: Case roughening step
- S2: Terminal roughening step
- S3: Resin molding step

## Claims

1. A power storage device (1;100;200) comprising:
a case (10) having a case member (21) comprising metal;
a safety valve (30) provided in the case member (21); and
an electrode body (50) housed in the case (10),
**characterized in that** the case member (21) has a case inner surface (23) located on an inside (EH), and a valve periphery roughened portion (24;124;244) located around the safety valve (30) on the case inner surface (23),
wherein the power storage device (1; 100;200) further comprises a blockage preventing resin protrusion (40;140;240) that is a protrusion comprising resin and protruding to the inside (EH), the blockage preventing resin protrusion (40;140;240) being joined to the valve periphery roughened portion (24;124;244) of the case inner surface (23) and configured to reduce a possibility of a broken piece of the electrode body (50) blocking the safety valve (30) from the inside (EH) when the electrode body (50) breaks,
wherein nanocolumns (26) formed by joining particles (26p) derived from the metal that forms the case member (21) together like strings of beads into the form of columns and having a height (ha) of 50 nm or greater stand numerously on the valve periphery roughened portion (24;124;244), and
wherein the blockage preventing resin protrusion (40;140;240) is joined to the valve periphery roughened portion (24;124;244) such that a resin material (45) that forms the blockage preventing resin protrusion (40;140;240) fills gaps between the nanocolumns (26) standing numerously.

2. A method of manufacturing a power storage device (1; 100;200) including a case (10) having a case member (21) comprising metal, a safety valve (30) provided in the case member (21), and an electrode body (50) housed in the case (10), wherein the case member (21) has a case inner surface (23) located on an inside (EH), and a valve periphery roughened portion (24;124;244) located around the safety valve (30) on the case inner surface (23), wherein the power storage device further includes a blockage preventing resin protrusion (40;140;240) that is a protrusion comprising resin and protruding to the inside, the blockage preventing resin protrusion (40;140;240) being joined to the valve periphery roughened portion (24;124;244) of the case inner surface (23) and configured to reduce a possibility of a broken piece of the electrode body (50) blocking the safety valve (30) from the inside (EH) when the electrode body (50) breaks, wherein nanocolumns (26) formed by joining particles (26p) derived from the metal that forms the case member (21) together like strings of beads into the form of columns and having a height (ha) of 50 nm or greater stand numerously on the valve periphery roughened portion (24;124;244), and wherein the blockage preventing resin protrusion (40;140;240) is joined to the valve periphery roughened portion (24;124;244) such that a resin material (45) that forms the blockage preventing resin protrusion (40;140;240) fills gaps between the nanocolumns (26) standing numerously,
**characterized in that** the method comprises:
case roughening (S1) of intermittently applying a pulsed laser beam (LB) to the case inner surface (23) of the case member (21) while shifting an irradiation position to form the valve periphery roughened portion (24;124;244) on which the nanocolumns (26) stand numerously; and
resin molding (S3) of molding the blockage preventing resin protrusion (40;140;240) while filling gaps between the nanocolumns (26) standing numerously on the valve periphery roughened portion (24;124;244) with the resin material (45).

3. The method according to claim 2, wherein:
the case member (21) has an insertion hole;
the power storage device (1;100;200) further includes a terminal member (60) inserted through the insertion hole (21h) of the case member (21), and a terminal resin member (70) that is joined to the case member (21) and the terminal member (60) while insulating the case member (21) and the terminal member (60) from each other to fix the terminal member (60) to the case member (21); and
the resin molding (S3) comprises molding the terminal resin member (70) joined to the case member (21) and the terminal member (60) and molding the blockage preventing resin protrusion (40;140;240) joined to the case member (21) in a condition where the terminal member (60) is inserted through the insertion hole (21h) of the case member (21).
